# FASCICULE DE BREVET EUROPEEN

(11) **EP 3 825 568 B1**
(45) Date de publication et mention de la délivrance du brevet: **26.04.2023**
(21) Numéro de dépôt: 20206524.9
(22) Date de dépôt: 09.11.2020
(51) Int. Cl.: F16D 25/0638, B60K 6/387, B60K 6/48

(54) **DISPOSITIF DE TRANSMISSION DE COUPLE**
VORRICHTUNG ZUR DREHMOMENTÜBERTRAGUNG
TORQUE TRANSMISSION DEVICE

(30) Priorité: 19.11.2019 FR 1912896
(43) Date de publication de la demande: 26.05.2021
(73) Titulaire: VALEO EMBRAYAGES, 80009 Amiens (FR)
(72) Inventeur: DOLE, Arnaud, 95892 CERGY PONTOISE (FR); DEQUESNES, Laurent, 95892 CERGY PONTOISE (FR); VUAROQUEAUX, Guillaume, 95892 CERGY PONTOISE (FR); DOREMUS, Olivier, 95892 CERGY PONTOISE (FR); THIBAUT, François, 95892 CERGY PONTOISE (FR); CAUMARTIN, Laurent, 95892 CERGY PONTOISE (FR)
(74) Mandataire: Valeo Powertrain Systems

(56) Documents cités:
- EP-A1- 3 757 414
- EP-A1- 3 771 584
- EP-A1- 3 879 133
- EP-A1- 3 927 990
- EP-A1- 3 927 992
- WO-A1-2019/166515
- WO-A1-2020/099136
- WO-A1-2021/099070
- FR-A1- 3 090 774

## Description

La présente invention se rapporte au domaine des transmissions pour véhicules automobiles. Elle se rapporte notamment à dispositif de transmission de couple destiné à être disposé dans la chaine de traction d'un véhicule automobile, entre un moteur thermique et une boîte de vitesses.

L'invention concerne en particulier les dispositifs de transmission pour un véhicule automobile de type hybride dans lequel une machine électrique tournante est disposée dans la chaine de traction.

Lors du transport de dispositifs de transmission de couple, il est primordial que les éléments constitutifs du dispositif constituent un ensemble indissociable. Cet ensemble doit en particulier résister au moins aux conditions de mise en caisse avant livraison, résistance aux chocs et/ou accélération durant le transport et manipulations pendant ou après livraison ou durant l'assemblage ou tout autre manipulation.

Les exigences fonctionnelles que doivent garantir de tels ensembles sont les suivantes :
- ne pas perdre de pièces,
- ne pas permettre un mouvement interne irréversible, et
- ne pas permettre un déplacement interne endommageant une ou plusieurs pièces.

Il est connu de l'art antérieur des mécanismes à triple embrayage constitués de plusieurs sous assemblages autonomes et sans jeux internes ou avec des jeux maitrisés à l'assemblage. Le triple embrayage comprend typiquement un mécanisme à double embrayage humide pour un véhicule automobile comprenant des moyens d'entrée de couple, un premier arbre de sortie de couple, un second arbre de sortie de couple, un premier embrayage apte à coupler ou découpler les moyens d'entrée de couple et le premier arbre de sortie de couple, un deuxième embrayage apte à coupler ou découpler les moyens d'entrée de couple et le second arbre de sortie de couple

De tels mécanismes comportent un empilage axial de pièces tournantes ou fixes comprises entre un appui fixe coté boite de vitesse et un appui fixe côté dispositif d'amortissement ou moteur thermique, les appuis fixes étant typiquement des parois latérales du carter de la boite de vitesses. Ces pièces sont maintenues :
- radialement par leurs formes propres,
- axialement par les effort internes des pièces constitutives (ressorts)
- par des circlips et/ou des soudures, et
- lors de l'assemblage des sous-ensembles entre eux.

Les pièces sont fabriquées avec des cotes assurant l'assemblage des pièces et la réalisation des fonctions une fois montés dans le véhicule. Lorsque les pièces sont assemblées en sous ensemble, les pièces sont agencées de façon à respecter les chaines de cotes d'assemblage et fonctionnelles. On obtient alors des sous-ensembles fonctionnels. Ceux-ci lors de leur assemblage final doivent aussi respecter un certain nombre de chaines de cotes assurant les fonctionnalités demandées.

L'assemblage sur le véhicule doit garantir que les pièces du dispositif répondent aux exigences fonctionnelles c'est-à-dire que les chaines de cotes fonctionnelles sont respectées. Les pièces constitutives des chaines de cotes sont alors considérées comme en appui sur un côté car l'assemblage force les pièces à être dans cet état d'appui. Maintenant si l'effort d'assemblage n'existe pas (cas avant assemblage final sur véhicule), les pièces sont alors dans une position intermédiaire entre toutes les positions possibles. Elles peuvent être dans une position ne répondant pas aux exigences fonctionnelles avant montage comme vues précédemment.

Des exemples sont divulgués par les documents suivants : WO2019166515, EP3771584 (art. 54(3) CBE) , EP3757414 (art. 54(3) CBE), EP3879133 (art. 54(3) CBE), EP3927992 (art. 54(3) CBE) et EP3927990 (art. 54(3) CBE)

Il faut donc garantir quelques soient les phases de vie entre l'assemblage du dispositif de transmission de couple en tant que tel et l'assemblage final dans le véhicule, que les pièces satisfont toutes les exigences fonctionnelles.

L'invention a notamment pour but d'apporter une solution simple, efficace et économique à ce problème.

L'invention y parvient, selon l'un de ses aspects, à l'aide d'un dispositif de transmission de couple, notamment pour véhicule automobile, comprenant un triple embrayage humide et un carter de boite de vitesses comportant une première paroi latérale, une deuxième paroi latérale et une portion axiale reliant les deux parois latérales, ledit triple embrayage humide comprenant :
- un élément d'entrée de couple en rotation autour d'un axe X, apte à être couplé en rotation à un vilebrequin d'un moteur thermique,
- un premier et un deuxième élément de sortie de couple, aptes à être couplés respectivement en rotation à un premier et un deuxième arbre d'entrée d'une boite de vitesses,
- un premier et un deuxième embrayage de sortie agencés entre l'élément d'entrée de couple et les éléments de sortie de couple au sens de la transmission de couple,
- un moyeu d'alimentation d'huile comprenant une portion cylindrique, un flasque s'étendant radialement depuis la portion cylindrique, un couvercle d'entrainement et un support s'étendant radialement depuis le couvercle d'entrainement en direction de l'élément d'entrée de couple, et
- un embrayage de coupure accouplant sélectivement et par friction l'élément d'entrée de couple et le couvercle d'entrainement,
le dispositif comprenant en outre un premier espace défini par la première paroi latérale du carter et le support et un second espace défini par le flasque et la deuxième paroi latérale du carter, lesdits espaces étant aptes à recevoir un organe de roulement pour bloquer axialement le triple embrayage dans le carter de boite de vitesses. Selon l'invention, l'embrayage de coupure, le premier embrayage de sortie et le deuxième embrayage de sortie sont empilés et alignés radialement.

Le dispositif de la présente invention présente ainsi l'avantage de pouvoir réduire artificiellement le jeu entre le triple embrayage et le carter de boite de vitesses en ayant recours à un calage interne des pièces limitant le mouvement axial de ces deux ensembles avant livraison et assemblage final.

Dans la suite de la description et les revendications, on utilisera à titre non limitatif et afin d'en faciliter la compréhension, les termes « avant » AV ou « arrière » AR selon la direction par rapport à une orientation axiale déterminée par l'axe X principal de rotation de la transmission du véhicule automobile « l'avant » désignant la partie située à gauche des figures, du côté du moteur, et « l'arrière » désignant la partie droite des figures, du côté de la transmission; et « intérieur /interne » ou « extérieur / externe » par rapport à l'axe X et suivant une orientation radiale, orthogonale à ladite orientation axiale, « l'intérieur » désignant une partie proximale de l'axe longitudinal X et « l'extérieur » désignant une partie distale de l'axe longitudinal X. Au sens de l'invention, la succession radiale se comprend en termes de distance radiale.

Selon d'autres modes de réalisations avantageux, un tel dispositif peut présenter une ou plusieurs des caractéristiques suivantes prises en combinaison.

Selon un mode de réalisation, le dispositif comprend un premier et un deuxième organe de roulement agencés respectivement dans le premier et deuxième espace pour bloquer axialement le triple embrayage dans le carter de boite de vitesses.

Selon un mode de réalisation, le dispositif comprend un troisième espace défini par la première paroi latérale du carter et le support et un quatrième espace défini par le flasque et la deuxième paroi latérale du carter, lesdits espaces étant aptes à recevoir un organe de roulement permettant de supporter le triple embrayage. Les organes de roulement agencés dans le troisième et quatrième espace sont donc des organes de roulement radiaux qui reprennent uniquement les efforts radiaux statiques et dynamiques du triple embrayage.

Selon un mode de réalisation, le dispositif comprend un troisième et un quatrième organe de roulement agencés respectivement dans le troisième et quatrième espace pour supporter radialement le triple embrayage.

Selon un mode de réalisation, le dispositif comprend un cinquième organe de roulement logé dans un espace défini par le support et l'élément d'entrée de couple. L'organe de roulement étant apte à reprendre les efforts dynamiques radiaux induits depuis l'élément d'entrée de couple et/ou depuis les arbres d'entrée de la boite de vitesses.

Selon un mode de réalisation, le support s'étend radialement en-deçà de la première paroi latérale du carter. En d'autres termes la paroi interne du support est plus proche de l'axe X que la paroi interne de la paroi latérale du carter.

Selon un mode de réalisation, la première paroi latérale présente à son extrémité interne une portion de cylindre s'étendant axialement.

Selon un mode de réalisation, le support présente à son extrémité interne une portion de cylindre s'étendant axialement à l'intérieur et à l'extérieur de la portion de cylindre de la première paroi latérale. Ainsi, la portion de cylindre de la paroi latérale est enveloppée, au moins en partie, à l'intérieur et à l'extérieur par le support, en particulier par sa paroi interne.

Selon un mode de réalisation, le dispositif comprend un palier agencé entre la portion cylindrique du moyeu d'alimentation en huile et l'élément de sortie de couple, ledit palier permettant le passage d'huile. De préférence, le palier est agencé radialement entre la portion cylindrique du moyeu d'alimentation en huile et l'élément de sortie de couple. De préférence, ce palier est un palier en plastique ou tout type de roulement permettant le passage d'huile tel qu'une huile de lubrification ou refroidissement entre le moyeu d'alimentation en huile et les embrayages du triple embrayage. Ce palier permet également de limiter le déplacement axial des pièces constituant le triple embrayage car il existe un mouvement relatif entre la portion cylindrique du moyeu d'alimentation en huile et l'élément de sortie de couple.

Selon un mode de réalisation, le dispositif comprend au moins trois paliers axiaux agencés pour supporter les efforts axiaux du triple embrayage, lesdits paliers axiaux étant disposés dans des épaulements du support, de l'élément d'entrée de couple et du premier élément de sortie de couple. De préférence, les trois paliers axiaux sont des butées à aiguilles.

Selon un mode de réalisation, le dispositif comprend au moins élément de calage axial disposé au contact d'une part de l'une des faces frontales dudit palier ou des palier axiaux et d'autre part de l'un parmi la portion cylindrique du moyeu d'alimentation en huile, le support, l'élément d'entrée de couple, le premier élément de sortie de couple et le deuxième élément de sortie de couple.

Lors des changements de sens de couple, des efforts de dentures apparaissent dans les arbres de boites. Ces efforts sont dus au passage de couple dans les engrenages hélicoïdaux. De plus, lors des changements de rapport de boite de vitesses, les arbres de sortie de couple se déplacent axialement en raison d'efforts axiaux présents au sein de la boite de vitesses. Les éléments de sortie de couple sont liés en rotation aux arbres d'entrée de boite de vitesses par l'intermédiaire de cannelures. Cette liaison cannelée a pour effet, durant les phases de transmission de couple, de solidariser axialement les arbres avec les éléments de sortie de couple. Le mouvement axial des arbres de boite de vitesses entraine un déplacement des éléments de sortie au sein du mécanisme d'embrayage.

Ce mouvement d'arbre est transmis au triple embrayage par l'intermédiaire du/des moyeux internes composant le/les éléments de sortie de couple lors du passage de couple entre la cannelure et le moyeu par le frottement des dents de la cannelure male sur la femelle. Le déplacement se traduit dans le triple embrayage par un effort lorsqu'il rencontre la raideur du carter coté moteur thermique / dispositif d'amortissement.

Le déplacement peut être négatif (boite de vitesses vers moteur thermique) ou positif (moteur thermique vers boite de vitesses). Dans un cas, l'effort va permettre de compacter les pièces. Dans l'autre cas, un jeu pourra apparaître entre les différentes pièces de l'assemblage. Ce jeu peut être préjudiciable au positionnement et/ou à la tenue dans le temps des éléments du triple embrayage s'il est trop important.

Les paliers axiaux permettent alors de transférer les efforts axiaux au sein du mécanisme à triple embrayage tout en autorisant la rotation éléments de sortie de couple entre eux. Les paliers axiaux typiquement constitués de bagues tournantes et d'aiguilles sont alors sollicités en charge. Il en ressort que les paliers axiaux et leurs contreparties (qui permettent d'éviter un contact entre deux pièces tournants à des vitesses différentes) pourraient être endommagées si un jeu trop important apparaissait :
- par perte du contact ; lors du retour du contact, un choc pourrait endommager les éléments,
- par désynchronisation de la vitesse des deux pièces de part et d'autre. Lors de la resynchronisation, les aiguilles du palier axial ne tournent plus à la même vitesse que l'une ou l'autre des deux pièces. Elles vont subir une forte accélération avec une possible perte d'adhérence. La perte d'adhérence peut générer une usure et du bruit.

Afin de permettre un fonctionnement optimal, plus précisément d'optimiser/réduire le couple de trainée, réduire la tolérance sur la chaine de cote, optimiser les courses d'actionnement, réduire in fine le packaging de l'embrayage, un calage interne de l'ensemble peut être réalisé au moyen d'un élément de calage axial afin d'éviter autant que possible les décollages de pièces.

Ainsi, grâce à l'au moins un élément de calage axial disposé en contact avec l'une des faces frontales d'un palier axial, cela permet de protéger l'ensemble des paliers axiaux par le comblement du jeu interne.

Au sens de la présente invention, une face frontale d'un palier axial est une face qui définit axialement une extrémité de ce palier. Le palier axial permet de ne pas avoir d'hystérésis entre les pièces en rotation.

Avantageusement, l'élément de calage axial présente une forme générale de disque annulaire, telle qu'une rondelle. De préférence, l'élément de calage axial est une pièce métallique qui permet de combler le jeu pour arriver à une côte finale qui doit être celle attendue.

Avantageusement, le dispositif de transmission de couple selon la présente invention comprend un unique élément de calage axial. En effet, un seul élément de calage axial choisi parmi différentes positions peut suffire car il s'agit de combler un jeu dans un ensemble de pièces.

Selon l'invention, l'embrayage de coupure, le premier embrayage de sortie et le deuxième embrayage de sortie sont empilés et alignés radialement, c'est-à-dire qu'il existe un axe fictif orthogonal à l'axe de rotation X qui passe par les trois embrayages.

Au sens de la présente demande, l'embrayage de coupure est celui situé radialement à l'extérieur, c'est-à-dire le plus loin de l'axe de rotation X du triple embrayage humide. Le deuxième embrayage étant celui situé radialement à l'intérieur, c'est-à-dire le plus proche de l'axe de rotation X du triple embrayage humide.

Selon un mode de réalisation, le moyeu d'alimentation en huile alimente en huile pour actionnement l'embrayage de coupure et le premier et deuxième embrayage de sortie.

Selon l'invention, les embrayages du triple embrayage sont humides. Les embrayages étant contenus dans au moins une chambre étanche remplie d'un fluide, notamment de l'huile. Au sens de la présente demande, un embrayage humide est un embrayage qui est adapté pour fonctionner dans un bain d'huile.

L'invention a également pour objet un module de transmission hybride pour véhicule automobile comprenant un dispositif de transmission de couple précité et une machine électrique tournante, le couvercle d'entrainement comprenant une zone de connexion électrique relié à la machine électrique de sorte que l'axe de rotation de la machine électrique soit décalé de l'axe de rotation X du dispositif de transmission de couple. La machine électrique est alors dite « off-line ».

Avantageusement, le couvercle d'entrainement peut comprendre une couronne dentée apte à être liée en rotation avec une machine électrique tournante autour d'un axe parallèle à l'axe de rotation X.

Selon un aspect additionnel de l'invention, la zone de connexion électrique du couvercle d'entrainement peut comprendre une couronne dentée apte à être engrenée directement par un pignon de la machine électrique tournante.

Selon une autre caractéristique de l'invention, la couronne dentée peut présenter une denture hélicoïdale de forme complémentaire au pignon de la machine électrique tournante.

De manière alternative, une chaine ou une courroie peut être utilisée pour relier la machine électrique tournante à la zone de connexion électrique.

En variante, on peut prévoir que le couvercle d'entrainement définit un support de rotor d'une machine électrique en rotation autour de l'axe de rotation. La machine électrique est alors « in-line ».

De préférence, le couvercle d'entrainement peut comprendre une zone de connexion électrique apte à être liée en rotation avec une machine électrique tournante autour d'un axe concentrique à l'axe de rotation X.

Avantageusement, la zone de connexion électrique du couvercle d'entrainement agencée pour recevoir un rotor de moteur électrique concentrique à l'axe X peut être décalée axialement par rapport au premier embrayage et au deuxième embrayage.

Cette disposition permet notamment de ne pas avoir à disposer la machine électrique radialement au-delà des embrayages, ce qui serait négatif pour la compacité radiale.

Cette disposition permet de positionner la machine électrique en fonction de l'espace disponible dans la chaine de traction du véhicule. Cette disposition permet notamment de ne pas avoir à disposer la machine électrique axialement à la suite des embrayages, ce qui serait négatif pour la compacité axiale. Cette disposition permet notamment de ne pas avoir à disposer la machine électrique radialement au-delà des embrayages, ce qui serait négatif pour la compacité radiale.

Selon l'invention, les embrayages, à savoir l'embrayage de coupure, le premier embrayage et le deuxième embrayage peuvent être de type multidisques. Dans le cadre de l'invention, un ensemble multidisques est un ensemble comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, les embrayages décrivant une position débrayée et une position embrayée dans laquelle lesdits plateaux et le disque de friction pincent les garnitures de friction de manière à transmettre un couple entre un porte-disque d'entrée et un porte-disque de sortie

Avantageusement, le dispositif de transmission de couple selon la présente invention est connecté à un machine électrique 48V ou haute tension.

Enfin, l'invention a également pour objet un véhicule automobile comprenant un module hybride selon la présente invention.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence à la figure annexée.

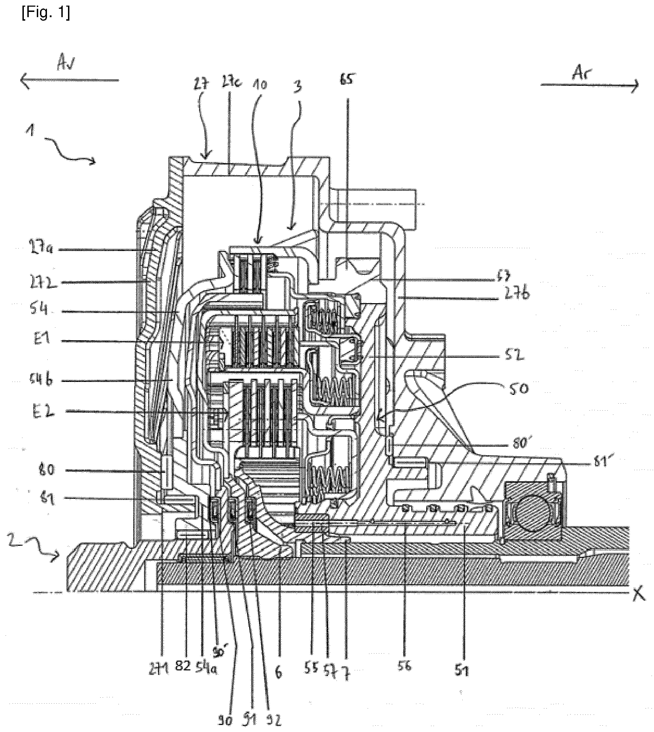

[Fig. 1] représente une vue en coupe axiale d'un dispositif de transmission de couple selon l'invention.

En relation avec la figure 1, on observe un dispositif de transmission de couple 1 comprenant :
- un élément d'entrée de couple 2 en rotation autour d'un axe X, apte à être couplé en rotation à un vilebrequin d'un moteur thermique (non représenté mais situé à l'avant du dispositif 1 de transmission de couple),
- un premier élément de sortie de couple 6, apte à être couplé en rotation à un premier arbre d'entrée d'une boîte de vitesses (non représenté mais situé à l'arrière du dispositif 1 de transmission de couple),
- un deuxième élément de sortie de couple 7, apte à être couplé en rotation à un deuxième arbre d'entrée d'une boîte de vitesses (non représenté) et
- un moyeu d'alimentation d'huile 50

Dans l'exemple considéré, le premier élément de sortie 6 est disposé en parallèle du deuxième élément de sortie 7 au sens de la transmission de couple. Chacun de ces éléments tourne autour d'un axe de rotation X du dispositif.

Les premiers et deuxièmes éléments de sortie 6, 7 comprennent respectivement un premier et un deuxième voile solidaire en rotation d'un premier et deuxième moyeu.

Les premiers et deuxièmes moyeux comprennent des interfaces de sortie dont la périphérie interne est cannelée et apte à coopérer, respectivement avec un premier et un deuxième arbre de boite de vitesses.

Un dispositif d'amortisseur de torsion (non représenté) peut être positionné entre le vilebrequin du moteur thermique et l'élément d'entrée de couple 2.

Le moyeu d'alimentation d'huile 50 est relié sélectivement à l'élément d'entrée de couple 2 par un embrayage de coupure 10, au premier élément de sortie de couple 6 par un premier embrayage de sortie E1 et au deuxième élément de sortie de couple 7 par un deuxième embrayage de sortie E2.

En relation avec la figure 1, nous allons maintenant décrire un triple embrayage 3 pouvant être utilisé dans le cadre de la présente invention et comprenant un embrayage de coupure 10, un premier embrayage de sortie E1 et un deuxième embrayage de sortie E2.

L'embrayage de coupure 10 comprend :
- un porte-disque d'entrée solidaire en rotation du premier élément d'entrée de couple 2,
- un porte-disque de sortie solidaire en rotation du moyeu d'alimentation d'huile 50 et
- un ensemble multidisque comprenant plusieurs disques de friction, ici deux, solidaires en rotation du porte-disque de d'entrée, plusieurs plateaux respectivement disposés de part et d'autre de chaque disque de friction, solidaires en rotation du porte-disque de sortie et des garnitures de friction disposées entre les plateaux et un disque de friction, fixées de chaque côté des disques de friction, l'embrayage 10 décrivant une position débrayée et une position embrayée dans laquelle lesdits plateaux et le disque de friction pincent les garnitures de friction de manière à transmettre un couple entre le porte-disque d'entrée et le porte-disque de sortie.

De manière analogue à l'embrayage d'entrée 10, le premier embrayage de sortie E1 et le deuxième embrayage de sortie E2 comprennent :
- un porte-disque d'entrée solidaire en rotation du moyeu d'alimentation d'huile 50,
- un porte-disque de sortie solidaire en rotation du premier élément de sortie 6 (pour l'embrayage E1) ou solidaire en rotation du deuxième élément de sortie 7 (pour l'embrayage E2) et,
- un ensemble multidisque comprenant plusieurs disques de friction, ici cinq (pour l'embrayage E1) et quatre (pour l'embrayage E2), solidaires en rotation du porte-disque de sortie, plusieurs plateaux respectivement disposés de part et d'autre de chaque disque de friction, solidaires en rotation du porte-disque d'entrée et des garnitures de friction disposées entre les plateaux et un disque de friction, fixées de chaque côté des disques de friction, les embrayages E1 et E2 décrivant une position débrayée et une position embrayée dans laquelle lesdits plateaux et le disque de friction pincent les garnitures de friction de manière à transmettre un couple entre le porte-disque d'entrée et le porte-disque de sortie.

De manière commune aux trois embrayages 10, E1 et E2, les garnitures peuvent être fixées sur les disques de friction, notamment par collage, notamment par rivetage, notamment par surmoulage. En variante, les garnitures sont fixées sur les plateaux.

Chaque porte-disque peut synchroniser en rotation l'ensemble des plateaux ou l'ensemble des disques de friction.

Selon un aspect de l'invention, les plateaux peuvent être solidaires en rotation du porte-disque d'entrée et les disques de friction peuvent être solidaires du porte-disque de sortie. En variante, les plateaux peuvent être solidaires en rotation du porte-disque de sortie. Les disques peuvent être solidaires en rotation du porte-disque d'entrée.

Les embrayages sont de type humide et comportent entre deux et sept disques de friction, de préférence quatre disques de friction. De tels embrayages multi-disques permettent de limiter la hauteur radiale de limiter l'étendue axiale.

Les embrayages de sortie E1, E2 peuvent être agencés pour ne pas être simultanément dans la même configuration embrayée. En revanche, ils peuvent simultanément être configurés dans leur position débrayée.

Le dispositif 1 comprend en outre un carter de de boite de vitesses 27. Ce carter 27 est agencé pour envelopper au moins partiellement l'élément d'entrée de couple 2, le premier et deuxième élément de sortie de couple 6, 7, l'embrayage d'entrée 10 et les embrayages de sortie E1, E2.

Le carter de boite de vitesses 27 est composé d'une première paroi latérale 27a, une deuxième paroi latérale 27b et une portion axiale 27c reliant les deux parois latérales 27a, 27b.

La première paroi latérale 27a est composée d'une paroi radiale 272 et à son extrémité interne d'une portion de cylindre 271 s'étendant axialement autour de l'axe X. La première paroi latérale 271 présente une forme générale sensiblement en « L », la base du « L » étant située du côté de l'axe de rotation X.

Avantageusement, le carter 27 peut-être fixé au moteur à combustion interne ou au moteur de la machine électrique par l'intermédiaire de moyens de fixation, par exemple de type vis ou rivet visibles.

Nous allons maintenant décrire plus en détails le moyeu d'alimentation d'huile 50 et d'axe de rotation X.

Le moyeu d'alimentation d'huile 50 alimente en huile l'embrayage de coupure 10, le premier embrayage de sortie E1 et le deuxième embrayage de sortie E2. Le moyeu 50 comprend une portion cylindrique 51, un flasque 52 s'étendant radialement depuis la portion cylindrique, un couvercle d'entrainement 53 et un support 54 s'étendant radialement depuis le couvercle d'entrainement 53 en direction de l'élément d'entrée de couple 2.

Le support 54 s'étend radialement en-deçà de la première paroi latérale 27a du carter. Ainsi, l'extrémité interne du support 54 est plus proche de l'axe de rotation X que l'extrémité interne de la première paroi latérale 27a.

Le support 54 est composé d'une portion de cylindre interne 54a et d'un flasque 54b. La portion de cylindre 54a s'étendant axialement à l'intérieur et à l'extérieur de la portion de cylindre 271 de la première paroi latérale 27a. Dans l'exemple considéré, la portion de cylindre 54a et le flasque 54b sont deux pièces solidaires en rotation. En variante, il peut s'agir d'une seule et même pièce.

Dans l'exemple considéré, le moyeu 50 comprend en outre une première cavité annulaire disposée sur le côté du flasque et agencé pour recevoir un piston d'actionnement du premier embrayage de sortie E1, une deuxième cavité annulaire disposé du même côté du flasque que la première cavité annulaire et agencé pour recevoir un piston d'actionnement du deuxième embrayage de sortie E2 et une troisième cavité annulaire disposé radialement au-delà des deux autres cavités annulaires et agencée pour recevoir un piston d'actionnement de l'embrayage de coupure 10.

Le moyeu comprend en outre un canal d'alimentation d'huile 56 traversant la portion cylindrique 51 et le flasque 52 et débouchant dans l'une des cavités annulaires. Le canal d'alimentation d'huile 56 peut être réalisé par perçage de conduites successives au sein du moyeu d'alimentation d'huile, lesdites conduites étant débouchantes les unes dans les autres et agencées pour alimenter en fluide sous pression la chambre de commande des embrayages. Le fluide peut être de l'huile, par exemple de l'huile de boîte de vitesses.

Le moyeu 50 est couplé en rotation à l'élément d'entrée de couple 2. Lorsque l'élément d'entrée de couple 2 est couplé à un arbre moteur entrainé en rotation par le vilebrequin d'un moteur, tel que décrit précédemment, et que l'embrayage 10 est fermé, alors le moyeu principal 50 est animé d'un mouvement de rotation analogue à celui de l'arbre moteur.

Comme illustré sur la figure 1, l'embrayage de coupure 10, le premier embrayage de sortie E1 et le deuxième embrayage de sortie E2 sont empilés et alignés radialement, c'est-à-dire qu'il existe un axe fictif orthogonal à l'axe de rotation X qui passe par les trois embrayages. L'embrayage de coupure 10 se trouve à l'extérieur par rapport au deux embrayages de sortie E1, E2. Le deuxième embrayage de sortie E2 est disposé à l'intérieur par rapport au premier embrayage de sortie E1.

De préférence, l'embrayage de coupure 10, le premier embrayage E1 et le deuxième embrayage E2 (ci-après « les embrayages ») sont à l'état ouvert, encore dit « normalement ouvert », et sont actionnés sélectivement en fonctionnement par un dispositif de commande (non représenté) pour passer de l'état ouvert à l'état fermé.

Les embrayages sont chacun commandés par un système d'actionnement agencé pour pouvoir configurer les embrayages dans une configuration quelconque comprise entre la configuration embrayée et la configuration débrayée.

Pour commander sélectivement le changement d'état des embrayages, le dispositif de commande gère l'alimentation en huile. Le dispositif de commande est raccordé au moyeu d'alimentation d'huile 50 qui comprend le réseau de passage de fluide 56.

A chaque embrayage 10, E1, E2 est associé un système d'actionnement. Chaque système d'actionnement comprend :
- une chambre de pression agencée pour recevoir un fluide pressurisé,
- un piston mobile axialement à l'intérieur de la chambre de pression,
- une chambre d'équilibrage située à l'opposé de la chambre de pression par rapport au piston.

Chaque système d'actionnement comprend en outre un élément de rappel élastique, agencé pour générer un effort axial s'opposant au déplacement du piston correspondant pour embrayer l'embrayage 10, E1, E2 correspondant. Ceci permet de rappeler automatiquement le piston en position débrayée, correspondant à un état ouvert de l'embrayage. Dans cette position, le piston libère axialement l'ensemble multidisque correspondant qui ne transmet alors plus de couple en direction du premier arbre d'entrée d'une boite de vitesse ou du deuxième arbre d'entrée d'une boite de vitesses.

Le piston d'actionnement de chaque embrayage peut être contrôlé par un capteur interne de position venant contrôler l'embrayage ou par mesure de la pression hydraulique lors de la fermeture de l'embrayage ou par mesure du volume de fluide injecté ou par mesure d'une grandeur de déplacement lors de la fermeture de l'embrayage.

Chaque piston est disposé axialement entre une chambre de pression et une chambre d'équilibrage. Les pistons prennent la forme d'une tôle ondulée et sont incurvés axialement vers l'avant AV ou vers l'arrière AR. Des appuis extérieurs s'étendent parallèlement à l'axe longitudinal X.

À titre d'exemple non limitatif, les pistons peuvent être obtenus par emboutissage.

Les chambres de pression des systèmes d'actionnement sont agencées pour recevoir un certain volume de fluide hydraulique sous pression afin de générer un effort axial sur un piston et de configurer ainsi l'embrayage correspondant dans l'une des configurations décrites précédemment. La chambre de pression qui génère l'effort du piston est associée à une chambre d'équilibrage agencée pour recevoir un certain volume de fluide hydraulique. Le fluide, du type de lubrification ou de refroidissement est avantageusement acheminé par l'intermédiaire de conduits de circulation fluidiques basse pression (non représentées sur le plan de coupe).

Avantageusement, les chambres de pression des systèmes d'actionnement des trois embrayages sont empilées et alignées radialement.

A chaque système d'actionnement est associé un élément de rappel élastique. Avantageusement, l'élément de rappel élastique est une rondelle Belleville ou est composé de ressorts hélicoïdaux.

Comme on peut le voir sur la figure 1, le dispositif comprend en outre un premier organe de roulement agencé dans un espace 80 défini par la première paroi latérale du carter 27a et le support 54 ainsi qu'un second organe de roulement agencé dans un espace 80' défini par le flasque 52 et la deuxième paroi latérale du carter 27b.

Les espaces 80, 80' sont donc définis par une paroi fixe, à savoir la première ou deuxième paroi latérale du carter 27a, 27b et une partie du triple embrayage à savoir le moyeu d'alimentation d'huile 50, en particulier le support 54 et le flasque 52. Les organes de roulements agencés dans les espaces 80, 80 permettent ainsi de bloquer axialement le triple embrayage 3 dans le carter de boite de vitesses 27.

Le dispositif comprend un troisième organe de roulement agencé dans un espace 81 défini par la première paroi latérale du carter 27a et le support 54 ainsi qu'un quatrième organe de roulement agencé dans un quatrième espace 81' défini par la flasque 52 et la deuxième paroi latérale du carter 27b. Ces organes de roulement permettent de supporter radialement le triple embrayage 3.

Enfin, le dispositif comprend un cinquième organe de roulement logé dans un espace 82 défini par le support 54 et l'élément d'entrée de couple 2.

Dans l'exemple considéré, le dispositif de transmission de couple 1 comprend également un palier 55 agencé entre la portion cylindrique 51 du moyeu d'alimentation en huile 50 et l'élément de sortie de couple 7, de préférence à l'extrémité avant du moyeu 50 Ce palier 55 permet le passage d'huile en provenance du moyeu d'alimentation d'huile 50 en direction du triple embrayage 3 et en particulier de la canalisation 56. Le passage d'huile est permis dans le palier 55 grâce à des rainures axiales 57.

Le dispositif comprend en outre au moins trois paliers axiaux 90, 91, 92. Chaque palier axial présente deux faces frontales. Les paliers axiaux sont configurés pour supporter les efforts axiaux du triple embrayage 3.

Les paliers axiaux 90, 91, 92 sont respectivement disposés dans un épaulement du support 54, de l'élément d'entrée de couple 2 et du premier élément de sortie de couple 6. Dans l'exemple considéré, les paliers axiaux 90, 91, 92, se chevauchent radialement, ils sont de préférence disposés sur une même hauteur radiale.

De manière avantageuse, les positions des paliers axiaux 90, 91, 92 sont les suivantes. Le premier palier axial 90 est interposé axialement entre la paroi interne 54a du support 54 et l'élément d'entrée de couple 2.

Le deuxième palier axial 91 est interposé entre l'élément d'entrée de couple 2 et l'élément de sortie 6 afin de supporter les efforts axiaux de l'élément d'entrée de couple 2 malgré les vitesses de rotation différentes auxquelles peuvent respectivement tourner l'arbre d'entrée et le premier arbre de transmission.

Le troisième palier axial 92 est intercalé axialement entre l'élément de sortie de couple 6 définissant le porte-disque de sortie de l'embrayage E1 et l'élément de sortie de couple 7 définissant le porte-disque de sortie de l'embrayage E2 afin de pouvoir transmettre une charge axiale entre les deux porte-disques de sortie qui peuvent tourner à des vitesses différentes lorsque les premier et deuxième embrayages E1, E2 sont configurés dans une configuration différente

Avantageusement, les paliers 90, 91, 92, sont des paliers à roulement avec un premier et deuxième disque entre lesquels est disposée une pluralité de corps de roulement, de type butée à aiguilles.

Le dispositif comprend en outre au moins un élément de calage axial 90' disposé au contact d'une part de l'une des faces frontales dudit palier 55 ou des palier axiaux 90, 91, 92 et d'autre part de l'un parmi la portion cylindrique 51 du moyeu d'alimentation en huile, le support 54, l'élément d'entrée de couple 2, le premier élément de sortie de couple 6 et le deuxième élément de sortie de couple 7.

Sur la figure est représenté une position possible de l'élément de calage axial entre la paroi interne 54a du support 54 et la face frontale avant du palier axial 90.

Dans l'exemple considéré, le couvercle d'entrainement 53 comprend une zone de connexion électrique 65 relié à une machine électrique tournante de sorte que l'axe de rotation de la machine électrique soit décalé de l'axe de rotation X du dispositif de transmission de couple 1. La machine électrique peut être une machine synchrone à aimants permanents. La machine électrique est ainsi reliée sélectivement à l'élément d'entrée de couple 2 par l'embrayage de coupure 10, au premier élément de sortie de couple 6 par le premier embrayage de sortie E1 et au deuxième élément de sortie de couple 7 par le deuxième embrayage de sortie E2.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, qui est défini par les revendications.

Dans les revendications, tout signe de référence entre parenthèses ne saurait être interprété comme une limitation de la revendication

## Revendications

1. Dispositif (1) de transmission de couple, notamment pour véhicule automobile, comprenant un triple embrayage humide (3) et un carter de boite de vitesses (27) comportant une première paroi latérale (27a), une deuxième paroi latérale (27b) et une portion axiale (27c) reliant les deux parois latérales (27a, 27b), ledit triple embrayage humide (3) comprenant :
- un élément d'entrée de couple (2) en rotation autour d'un axe X, apte à être couplé en rotation à un vilebrequin d'un moteurthermique,
- un premier et un deuxième élément de sortie de couple (6, 7), aptes à être couplés respectivement en rotation à un premier et un deuxième arbre d'entrée d'une boite de vitesses,
- un premier et un deuxième embrayage de sortie (E1, E2) agencés entre l'élément d'entrée de couple (2) et les éléments de sortie de couple (6, 7) au sens de la transmission de couple,
- un moyeu d'alimentation d'huile (50) comprenant une portion cylindrique (51), un flasque (52) s'étendant radialement depuis la portion cylindrique, un couvercle d'entrainement (53) et un support (54) s'étendant radialement depuis le couvercle d'entrainement (53) en direction de l'élément d'entrée de couple (2),
- un embrayage de coupure (10) accouplant sélectivement et par friction l'élément d'entrée de couple (2) et le couvercle d'entrainement (53),
le dispositif comprend en outre un premier espace (80) défini par la première paroi latérale du carter (27a) et le support (54) et un second espace (80') défini par le flasque (52) et la deuxième paroi latérale du carter (27b), lesdits espaces (80, 80') étant aptes à recevoir un organe de roulement pour bloquer axialement le triple embrayage (3) dans le carter de boite de vitesses (27)
**caractérisé en ce que** l'embrayage de coupure (10), le premier embrayage de sortie (E1) et le deuxième embrayage de sortie (E2) sont empilés et alignés radialement.

2. Dispositif de transmission de couple (1) selon la revendication 1, **caractérisé en ce qu'**il comprend en outre un troisième espace (81) défini par la première paroi latérale du carter (27a) et le support (54) et un quatrième espace (81') défini par le flasque (52) et la deuxième paroi latérale du carter (27b), lesdits espaces (81, 81') étant aptes à recevoir un organe de roulement permettant de supporter le triple embrayage (3).

3. Dispositif de transmission de couple (1) selon la revendication 1 ou la revendication 2, **caractérisé en ce que** le support (54) s'étend radialement en-deçà de la première paroi latérale (27a) du carter.

4. Dispositif de transmission de couple (1) selon l'une quelconque des revendications précédentes, **caractérisé en ce que** la première paroi latérale (27a) présente à son extrémité interne une portion de cylindre (271) s'étendant axialement.

5. Dispositif de transmission de couple (1) selon la revendication précédente **caractérisé en ce que** le support (54) présente à son extrémité interne une portion de cylindre (54a) s'étendant axialement à l'intérieuret à l'extérieur de la portion de cylindre (271) de la première paroi latérale (27a).

6. Dispositif de transmission de couple (1) selon l'une quelconque des revendications précédentes, **caractérisé en ce qu'**il comprend un palier (55) agencé entre la portion cylindrique (51) du moyeu d'alimentation en huile et l'élément de sortie de couple (7) et permettant le passage d'huile.

7. Dispositif de transmission de couple (1) selon l'une quelconque des revendications précédentes, **caractérisé en ce qu'**il comprend au moins trois paliers axiaux (90, 91, 92) agencés pour supporter les efforts axiauxdu triple embrayage (3), lesdits paliers axiaux étant disposés dans des épaulements du support (54), de l'élément d'entrée de couple (2) et du premierélément de sortie de couple (6).

8. Dispositif de transmission de couple (1) selon la revendication 6 ou 7, **caractérisé en ce qu'**il comprend au moins un élément de calage axial (90') disposé au contact d'une part de l'une des faces frontales dudit palier (55) ou des palier axiaux (90, 91, 92) et d'autre part de l'un parmi la portion cylindrique (51) du moyeu d'alimentation en huile, le support (54), l'élément d'entrée de couple (2), le premier élément de sortie de couple (6) et le deuxième élément de sortie de couple (7).

9. Module de transmission hybride pour véhicule automobile, **caractérisé en ce qu'**il comprend un dispositif de transmission de couple (1) selon l'une des revendications 1 à 8 et une machine électrique tournante, le couvercle d'entrainement (53) comprenant une zone de connexion électrique (65) relié à la machine électrique de sorte que l'axe de rotation de la machine électrique soit décalé de l'axe de rotation (X) du dispositif de transmission de couple (1).

## Patentansprüche

1. Vorrichtung (1) zur Drehmomentübertragung, insbesondere für ein Kraftfahrzeug, die eine nasse Dreifachkupplung (3) und ein Getriebegehäuse (27), das eine erste Seitenwand (27a), eine zweite Seitenwand (27b) und einen axialen Abschnitt (27c), der die zwei Seitenwände (27a, 27b) verbindet, umfasst, beinhaltet, wobei die nasse Dreifachkupplung (3) Folgendes beinhaltet:
- ein Drehmomenteingangselement (2), das sich um eine X-Achse dreht und dazu fähig ist, mit einer Kurbelwelle eines Verbrennungsmotors drehgekoppelt zu sein,
- ein erstes und ein zweites Drehmomentausgangselement (6, 7), die dazu fähig sind, jeweils mit einer ersten und einer zweiten Eingangswelle eines Getriebes drehgekoppelt zu sein,
- eine erste und eine zweite Ausgangskupplung (E1, E2), die entsprechend der Drehmomentübertragungsrichtung zwischen dem Drehmomenteingangselement (2) und den Drehmomentausgangselementen (6, 7) eingerichtet sind,
- eine Ölzufuhrnabe (50), die einen zylindrischen Abschnitt (51) beinhaltet, einen Flansch (52), der sich von dem zylindrischen Abschnitt radial erstreckt, einen Antriebsdeckel (53) und einen Träger (54), der sich von dem Antriebsdeckel (53) radial in Richtung des Drehmomenteingangselements (2) erstreckt,
- eine Trennkupplung (10), die das Drehmomenteingangselement (2) und den Antriebsdeckel (53) selektiv und reibschlüssig koppelt,
wobei die Vorrichtung ferner einen ersten Raum (80), der durch die erste Seitenwand des Gehäuses (27a) und den Träger (54) definiert wird, und einen zweiten Raum (80'), der durch den Flansch (52) und die zweite Seitenwand des Gehäuses (27b) definiert wird, beinhaltet, wobei die Räume (80, 80') dazu fähig sind, ein Wälzelement aufzunehmen, um die Dreifachkupplung (3) in dem Getriebegehäuse (27) axial zu sichern,
**dadurch gekennzeichnet, dass** die Trennkupplung (10), die erste Ausgangskupplung (E1) und die zweite Ausgangskupplung (E2) radial gestapelt und ausgerichtet sind.

2. Drehmomentübertragungsvorrichtung (1) nach Anspruch 1, **dadurch gekennzeichnet, dass** sie ferner einen dritten Raum (81), der durch die erste Seitenwand des Gehäuses (27a) und den Träger (54) definiert wird, und einen vierten Raum (81'), der durch den Flansch (52) und die zweite Seitenwand des Gehäuses (27b) definiert wird, beinhaltet, wobei die Räume (81, 81') dazu fähig sind, ein Wälzelement aufzunehmen, welches es ermöglicht, die Dreifachkupplung (3) zu stützen.

3. Drehmomentübertragungsvorrichtung (1) nach Anspruch 1 oder Anspruch 2, **dadurch gekennzeichnet, dass** sich der Träger (54) radial unterhalb der ersten Seitenwand (27a) des Gehäuses erstreckt.

4. Drehmomentübertragungsvorrichtung (1) nach einem beliebigen der vorhergehenden Ansprüche, **dadurch gekennzeichnet, dass** die erste Seitenwand (27a) an ihrem inneren Ende einen zylindrischen Abschnitt (271) aufweist, der sich axial erstreckt.

5. Drehmomentübertragungsvorrichtung (1) nach dem vorhergehenden Anspruch, **dadurch gekennzeichnet, dass** der Träger (54) an seinem inneren Ende einen zylindrischen Abschnitt (54a) aufweist, der sich axial auf der Innenseite und der Außenseite des zylindrischen Abschnitts (271) der ersten Seitenwand (27a) erstreckt.

6. Drehmomentübertragungsvorrichtung (1) nach einem beliebigen der vorhergehenden Ansprüche, **dadurch gekennzeichnet, dass** sie ein Lager (55) beinhaltet, das zwischen dem zylindrischen Abschnitt (51) der Ölzufuhrnabe und dem Drehmomentausgangselement (7) eingerichtet ist und den Durchgang von Öl ermöglicht.

7. Drehmomentübertragungsvorrichtung (1) nach einem beliebigen der vorhergehenden Ansprüche, **dadurch gekennzeichnet, dass** sie mindestens drei Axiallager (90, 91, 92) beinhaltet, die dazu eingerichtet sind, die Axialkräfte der Dreifachkupplung (3) aufzunehmen, wobei die Axiallager in Vorsprüngen des Trägers (54), des Drehmomenteingangselements (2) und des ersten Drehmomentausgangselements (6) angeordnet sind.

8. Drehmomentübertragungsvorrichtung (1) nach Anspruch 6 oder 7, **dadurch gekennzeichnet, dass** sie mindestens ein axiales Ausgleichselement (90') beinhaltet, das in Kontakt mit einerseits einer der Stirnflächen des Lagers (55) oder der Axiallager (90, 91, 92) und andererseits einem von dem zylindrischen Abschnitt (51) der Ölzufuhrnabe, dem Träger (54), dem Drehmomenteingangselement (2), dem ersten Drehmomentausgangselement (6) und dem zweiten Drehmomentausgangselement (7) angeordnet ist.

9. Hybridübertragungsmodul für ein Kraftfahrzeug, **dadurch gekennzeichnet, dass** es eine Drehmomentübertragungsvorrichtung (1) nach einem der Ansprüche 1 bis 8 und eine rotierende elektrische Maschine beinhaltet, wobei der Antriebsdeckel (53) einen elektrischen Verbindungsbereich (65) beinhaltet, der so mit der elektrischen Maschine verbunden ist, dass die Rotationsachse der elektrischen Maschine von der Rotationsachse (X) der Drehmomentübertragungsvorrichtung (1) versetzt ist.

## Claims

1. Torque transmission device (1), in particular for a motor vehicle, comprising a triple wet clutch (3) and a gearbox casing (27) having a first side wall (27a), a second side wall (27b) and an axial portion (27c) connecting the two side walls (27a, 27b), said triple wet clutch (3) comprising:
- a torque input element (2), rotating about an axis X, that is able to be rotationally coupled to a crankshaft of a combustion engine,
- a first and a second torque output element (6, 7) that are able to be rotationally coupled to a first input shaft and a second input shaft, respectively, of a gearbox,
- a first and a second output clutch (E1, E2) that are arranged between the torque input element (2) and the torque output elements (6, 7) in the direction of torque transmission,
- an oil supply hub (50) comprising a cylindrical portion (51), a flange (52) that extends radially from the cylindrical portion, a drive cover (53) and a support (54) that extends radially from the drive cover (53) in the direction of the torque input element (2),
- a decoupling clutch (10) that selectively and frictionally couples the torque input element (2) and the drive cover (53),
the device also comprising a first space (80) defined by the first side wall (27a) of the casing and the support (54) and a second space (80') defined by the flange (52) and the second side wall (27b) of the casing, said spaces (80, 80') being able to receive a rolling member for axially immobilizing the triple clutch (3) in the gearbox casing (27),
**characterized in that** the decoupling clutch (10), the first output clutch (E1) and the second output clutch (E2) are stacked and aligned radially.

2. Torque transmission device (1) according to Claim 1, **characterized in that** it also comprises a third space (81) defined by the first side wall (27a) of the casing and the support (54) and a fourth space (81') defined by the flange (52) and the second side wall (27b) of the casing, said spaces (81, 81') being able to receive a rolling member for supporting the triple clutch (3).

3. Torque transmission device (1) according to Claim 1 or Claim 2, **characterized in that** the support (54) extends radially below the first side wall (27a) of the casing.

4. Torque transmission device (1) according to any one of the preceding claims, **characterized in that** the first side wall (27a) has, at its internal end, a cylinder portion (271) that extends axially.

5. Torque transmission device (1) according to the preceding claim, **characterized in that** the support (54) has, at its internal end, a cylinder portion (54a) that extends axially on the inside and on the outside of the cylinder portion (271) of the first side wall (27a).

6. Torque transmission device (1) according to any one of the preceding claims, **characterized in that** it comprises a bearing (55) that is arranged between the cylindrical portion (51) of the oil supply hub and the torque output element (7) and allows oil to pass through.

7. Torque transmission device (1) according to any one of the preceding claims, **characterized in that** it comprises at least three axial bearings (90, 91, 92) arranged so as to support the axial loads of the triple clutch (3), said axial bearings being disposed in shoulders of the support (54), of the torque input element (2) and of the first torque output element (6).

8. Torque transmission device (1) according to Claim 6 or 7, **characterized in that** it comprises at least one axial wedging element (90') disposed in contact on one side with one of the frontal faces of said bearing (55) or of the axial bearings (90, 91, 92) and on the other side with one from the cylindrical portion (51) of the oil supply hub, the support (54), the torque input element (2), the first torque output element (6) and the second torque output element (7).

9. Hybrid transmission module for a motor vehicle, **characterized in that** it comprises a torque transmission device (1) according to one of Claims 1 to 8 and a rotary electric machine, the drive cover (53) comprising an electrical connection zone (65) connected to the electric machine such that the axis of rotation of the electric machine is offset from the axis of rotation (X) of the torque transmission device (1).
